# EUROPÄISCHE PATENTSCHRIFT

(11) **EP 0 555 741 B1**
(45) Veröffentlichungstag und Bekanntmachung des Hinweises auf die Patenterteilung: **14.05.1997**
(21) Anmeldenummer: 93101610.9
(22) Anmeldetag: 03.02.1993
(51) Int. Cl.: C08F 10/02, C08F 4/22

(54) **Phillips-Katalysator und seine Verwendung zur Herstellung von Ethylen-alpha-Olefin-Copolymerisaten**
Phillips-catalyst and its use for the production of ethylene-alpha-olefin copolymers
Catalyseur de type Phillips et son utilisation pour produire des copolymères d'éthylène-alpha-oléfine

(30) Priorität: 13.02.1992 DE 4204260
(43) Veröffentlichungstag der Anmeldung: 18.08.1993
(73) Patentinhaber: BASF Aktiengesellschaft, 67063 Ludwigshafen (DE)
(72) Erfinder: Mueller, Hans-Joachim, Dr., W-6718 Gruenstadt (DE); Evertz, Kaspar, Dr., W-6707 Schifferstadt (DE); Weber, Siegfried, Dr., W-6940 Weinheim (DE); Funk, Guido, Dr., W-6520 Worms 1 (DE); Konrad, Rainer, Dr., W-6701 Goennheim (DE); Saive, Roland, Dr., W-6700 Ludwigshafen (DE)

(56) Entgegenhaltungen:
- EP-A- 0 137 934
- EP-A- 0 291 824
- EP-A- 0 372 328
- GB-A- 2 086 403
- US-A- 4 960 748

## Beschreibung

Die vorliegende Erfindung betrifft einen neuen Phillips-Katalysator für die Copolymerisation von Ethylen mit α-Olefinen, welcher als katalytisch wirksame Komponente einen feinteiligen, Aluminiumsilikat-geträgerten, phosphorhaltigen Chromkatalysator enthält.

Geträgerte Chromkatalysatoren bilden den wesentlichen Bestandteil der katalytisch wirksamen Komponenten der Phillips-Katalysatoren, wie sie bekanntermaßen für die Copolymerisation von Ethylen und α-Olefinen nach dem Suspensionspolymerisationsverfahren angewendet werden. Neben Silicagel und Aluminiumphosphat werden auch Aluminiumoxid-Siliciumoxid-Cogele oder Aluminiumsilikat-Gele als Träger in den Chromkatalysatoren angewandt (vgl. die US-A-2 825 721, die US-A-2 930 789 oder die DE-A-24 55 535). Bei der Herstellung der Chromkatalysatoren können außer Chrom noch Phosphorverbindungen auf die feinteiligen Aluminiumsilikat-Gele aufgetragen werden. Üblicherweise werden hierfür Phosphorsäure (vgl. die US-A-2 945 015) oder phosphororganische Verbindungen wie Alkylphosphate (vgl. die DE-A-25 02 940) angewandt. Diese Phosphorverbindungen können unter den bei der Herstellung der Katalysatorvorstufen angewandten Bedingungen mit dem üblicherweise verwendeten Chromtrioxid zu chrom- und phosphorhaltigen Verbindungen reagieren, welche letztendlich auf die Aluminiumsilikat-Gele aufgetragen werden. Indes weisen die Phillips-Katalysatoren, welche diese bekannten Chromkatalysatoren als katalytisch wirksame Komponenten enthalten, nur eine geringe Produktivität auf, was das Auswaschen der Katalysatorreste aus den erhaltenen Polymerisaten erforderlich macht. Außerdem ist die Verwendung des carcinogenen Chromtrioxids bei der Herstellung dieser Phillips-Katalysatoren ein schwerwiegender Nachteil.

Daneben sind Phillips-Katalysatoren bekannt, welche feinteilige, Silikat-geträgerte, phosphorhaltige Chromkatalysatoren enthalten, bei deren Herstellung das Silikatgel oder die phosphor- und chromhaltige Katalysatorvorstufe mit aluminiumorganischen Verbindungen behandelt werden (vgl. die DE-A-28 20 860 oder die DE-A-26 10 422). Die betreffenden Phillips-Katalysatoren liefern zwar Polymerisate mit hohen Schmelzindices, indes läßt ihre Produktivität noch stark zu wünschen übrig.

Hier hat der aus der EP-A-0 264 895 bekannte Phillips-Katalysator einen Fortschritt mit sich gebracht. Dieser Phillips-Katalysator liefert in höheren Ausbeuten Ethylenhomopolymerisate und -copolymerisate, welche sich außerdem noch durch eine gute Verarbeitbarkeit auszeichnen. Bei der Herstellung der betreffenden Chromkatalysatoren werden indes organische Phosphorverbindungen und die Reaktionsprodukte von Chrom(III)-acetylacetonato-Komplexen mit aluminiumorganischen Verbindungen auf Silikat-Gele aufgetragen, und die resultierenden Phillips-Katalysatoren werden noch in üblicher und bekannter Weise mit Gemischen aus lithium- und bororganischen Verbindungen aktiviert.

Indes entspricht die Spannungsrißbeständigkeit ["environmental stress cracking resistance" (ESCR)] von Formteilen aus Ethylenhomopolymerisaten und -copolymerisaten, welche in üblicher und bekannter Weise hergestellt worden sind, noch immer nicht allen Anforderungen des Marktes. Dies gilt im besonderen Maße für die betreffenden Kleinhohlkörper und Kanister, da diese in der Praxis oftmals mit benetzenden und damit spannungsrißauslösenden Flüssigkeiten gefüllt sind. Auch das Zeitstandverhalten bzw. die Zeitstandfestigkeit von unter Innendruck stehen Rohren aus diesen in üblicher und bekannter Weise erhaltenen Ethylenhomopolymerisaten und -copolymerisaten vermag nicht im vollen Umfang zu befriedigen.

Der strukturelle Parameter, welcher die Spannungsrißbeständigkeit (ESCR) und die Zeitstandfestigkeit der Formteile aus Ethylencopolymerisaten im wesentlichen bestimmt, ist die Anzahl der Kurzkettenverzweigungen. Eine große Anzahl solcher Kurzkettenverzweigungen wirkt sich günstig auf diese anwendungstechnischen Eigenschaften aus. Indes muß dies dann mit einer Absenkung der Dichte und einem Verlust an Steifigkeit erkauft werden. Somit ist die Verbesserung der ESCR und der Zeitstandfestigkeit durch die Vermehrung der Kurzkettenverzweigungen in den Ethylencopolymerisaten nur sehr schränkt möglich.

Nach R. Hayes und W. Webster, Plastics Institute Transactions, Band 32, Seiten 219 ff., 1964, kann eine Verbesserung der ESCR und der Zeitstandfestigkeit auch durch einen optimierten, gleichmäßigeren Einbau der Comonomeren in die Ethylencopolymerisate erreicht werden. So weisen Ethylencopolymerisate eine vergleichsweise hohe Spannungsrißbeständigkeit und eine verhältnismäßig gute Zeitstandfestigkeit auf, wenn ihr hochmolekularer Anteil eine besonders hohe Konzentration an Kurzkettenverzweigungen, d.h. einen hohen Comonomeranteil, enthält.

Indes werden durch die bislang bekannten Phillips-Katalysatoren die Comonomeren bevorzugt in die niedermolekularen Anteile der Ethylencopolymerisate eingebaut, was zu den vorstehend genannten Nachteilen führt. Diese Nachteile können in gewissem Umfang dadurch behoben werden, daß man die Phillips-Katalysatoren mit Verbindungen wie Ammoniumhexafluorsilikat fluoridiert (vgl. die US-A-3 509 116 und 4 011 382). Wie F.J. Karol in Proceedings of the International Symposium on Transition Metal Catalyzed Polymerization (1986), Editor: R.P. Quirk, Cambridge University Press, Cambridge, Großbritannien, Seiten 702 ff., 1988, feststellt, weisen die mit Hilfe der fluoridierten Phillips-Katalysatoren erhältlichen Ethylencopolymerisate eine gleichmäßigere Comonomerverteilung auf, indes haben sie aber auch eine engere Molmassenverteilung. Diese engere Molmassenverteilung bewirkt im Vergleich zu Ethylencopolymerisaten von identischem Schmelzindex aber breiterer Molmassenverteilung eine Abnahme der ESCR und eine Verschlechterung der Zeitstandfestigkeit.

Aufgabe der vorliegenden Erfindung war es, einen neuen Phillips-Katalysator bereitzustellen, welcher die Nachteile des Standes der Technik nicht mehr länger aufweist und welcher in hoher Ausbeute Ethylen-α-Olefincopolymerisate liefert, welche sich zu Formteilen wie Kleinhohlkörper, Kanister oder Rohre von hoher Spannungsrißbeständigkeit (ESCR) und Zeitstandfestigkeit verarbeiten lassen.

Erfindungsgemäß konnte diese Aufgabe wirkungsvoll und elegant dadurch gelöst werden, daß man auf an sich bekannte Aluminiumsilikat-Hydrogele oder -Xerogele organische Phosphor(III)-, -(IV)- und -(V)-Verbindungen und Chrom(III)-Verbindungen aufträgt, wobei die Chrom(III)-Verbindungen und die organischen Phosphorverbindungen unter den bei der Herstellung der Katalysatorvorstufe angewandten Reaktionsbedingungen nicht miteinander reagieren. Im Hinblick auf den Stand der Technik war es nicht zu erwarten gewesen, daß mit Hilfe dieser Maßnahme die gesteckten Ziele, insbesondere die Verbesserung der ESCR und der Zeitstandfestigkeit von Ethyien-α-Olefincopolymerisaten, erreicht werden konnten.

Demgemäß handelt es sich bei dem Gegenstand der vorliegenden Erfindung um einen neuen Phillips-Katalysator für die Copolymerisation von Ethylen mit α-Olefinen, enthaltend als katalytisch wirksame Komponente einen feinteiligen, Aluminiumsilikat-geträgerten, phosphorhaltigen Chromkatalysator, herstellbar, indem man
(1) mindestens eine organische Phosphor(III)-, -(IV)- und/oder -(V)-Verbindung und mindestens eine Chrom(III)-Verbindung, welche mit den besagten Phosphorverbindungen unter den angewandten Reaktionsbedingungen nicht reagiert, in beliebiger Reihenfolge nacheinander oder gleichzeitig auf ein feinteiliges Aluminiumsilikat-Hydrogel oder -Xerogel unter Bildung einer Katalysatorvorstufe aufträgt und
(2) die Katalysatorvorstufe durch Erhitzen auf Temperaturen von 300 bis 900°C in einer oxidierenden Atmosphäre aktiviert, wodurch der Chromkatalysator entsteht, welcher einen Gehalt an Chrom zwischen 0,01 und 5 Gew.-%, einen Gehalt an Phosphor zwischen 0,01 und 5 Gew.-%und ein Atomverhältnis von Chrom:Phosphor von 20:1 bis 1:20 hat.

Im folgenden wird der neue Phillips-Katalysator für die Copolymerisation von Ethylen mit α-Olefinen der Kürze halber als "erfindungsgemäßer Phillips Phillips-Katalysator" bezeichnet.

Die erfindungsgemäß wesentliche katalytisch aktive Komponente des erfindungsgemäßen Phillips-Katalysators ist der neue, feinteilige, Aluminiumsilikat-geträgerte, phosphorhaltige Chromkatalysator, welcher durch Auftragen von organischen Phosphorverbindungen und Chromverbindungen auf ein an sich bekanntes feinteiliges Aluminiumsilikat-Hydrogel oder -Xerogel und durch Aktivieren der hierbei resultierenden Katalysatorvorstufe bei höheren Temperaturen in einer oxidierenden Atmosphäre herstellbar ist.

Für den erfindungsgemäßen Phillips-Katalysator ist es indes wesentlich, daß man für die Herstellung des Chromkatalysators mindestens eine Chrom(III)-Verbindung verwendet, welche unter den bei der Herstellung der Katalysatorvorstufe angewandten Reaktionsbedingungen nicht mit den jeweils verwendeten organischen Phosphor(III)-, -(IV)- und/oder -(V)-Verbindungen reagiert. Beispiele geeigneter Chrom(III)-Verbindungen, welche dieses Anforderungsprofil erfüllen, sind wasserlösliche Salze des dreiwertigen Chroms und Chrom(III)-Chelatkomplexe. Beispiele gut geeigneter wasserlöslicher Salze des dreiwertigen Chroms sind Chrom(III)-nitrat und -acetat, von denen Chrom(III)-nitrat ganz besonders vorteilhaft ist und für die Herstellung der Chromkatalysatoren ganz besonders bevorzugt verwendet wird. Beispiele gut geeigneter Chrom(III)-Chelatkomplexe sind die Acetylacetonatokomplexe der allgemeinen Formel I, 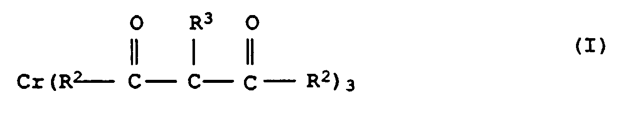 worin R² C₁- bis C₁₂-Alkyl und R³ für Wasserstoff oder einen Rest R² steht. Ein Beispiel für einen besonders gut geeigneten Chrom(III)-acetylacetonato-Komplex ist Tris-acetylacetonato-chrom(III), welches ganz besonders vorteilhaft ist und für die Herstellung der Chromkatalysatoren ganz besonders bevorzugt verwendet wird.

Für den erfindungsgemäßen Phillips-Katalysator ist es außerdem wesentlich, daß bei der Herstellung des Chromkatalysators organische Phosphor(III)-, -(IV)- und/oder -(V)- Verbindungen verwendet werden. Hierbei kommen alle organischen Phosphorverbindungen der betreffenden Oxidationsstufen in Betracht, welche mit den vorstehend genannten Chrom(III)-Verbindungen unter den Bedingungen, welche bei der Herstellung der Katalysatorvorstufe herrschen, nicht reagieren.

Vorteilhafterweise handelt es sich bei den organischen Phosphor(III)-Verbindungen um Phosphorigsäureester. Beispiele geeigneter Phosphorigsäureester sind die Mono-, Di- und Trialkylphosphite, die Mono-, Di- und Triarylphosphite sowie die gemischten Alkylarylphosphite.

Vorteilhafterweise handelt es sich bei den organischen Phosphor(IV)-Verbindungen um Phosphonsäureester. Beispiele geeigneter Phosphonsäureester sind die Mono- und die Dialkylester und die Mono- und Diarylester der Aryl- und Alkylphosphonsäuren sowie die Arylalkylester dieser Säuren.

Vorteilhafterweise handelt es sich bei den organischen Phosphor(V)-Verbindungen um Phosphorsäureester. Beispiele geeigneter Phosphorsäureester sind die Mono-, Di- und Trialkylphosphate, die Mono-, Di- und Triarylphosphate sowie die gemischten Alkylarylphosphate.

Beispiele gut geeigneter Phosphorverbindungen der vorstehend genannten Art sind Triethylphosphit, Triphenylphosphit, Methanphosphonsäuredimethylester und -diethylester, Ethanphosphonsäuredimethylester, Methanphosphonsäurediphenylester, Benzolphosphonsäuredimethylester und -diphenylester, Triphenylphosphat und Triethylphosphat, von denen Triethylphosphat ganz besonders vorteilhaft ist und deshalb für die Herstellung der Chromkatalysatoren ganz besonders bevorzugt verwendet wird.

Für den erfindungsgemäßen Phillips-Katalysator ist es außerdem wesentlich, daß bei der Herstellung des erfindungsgemäß zu verwendenden Chromkatalysators ein feinteiliges Aluminiumsilikat-Hydrogel oder -Xerogel verwendet wird. Hierbei ist unter feinteilig eine Teilchengröße im Bereich von 1 bis 2000 µm zu verstehen. Aluminiumsilikat-Hydrogele und -Xerogele, ihre Herstellung und ihre Verwendung sind aus der DE-A-24 55 535, der DE-A-29 45 015, der US-A-2 852 721 und der EP-A-0 046 897 bekannt. Üblicherweise werden diese Gele durch Neutralisation saurer, aluminiumionenhaltiger Wasserglaslösungen hergestellt. Die Neutralisation wird hierbei im allgemeinen so durchgeführt, daß sich ein Hydrogel bildet. Dieses kann durch azeotrope Destillation oder durch Auswaschen mit einem flüchtigen, mit Wasser mischbaren Lösungsmittel getrocknet werden. Daneben können aber auch übliche und bekannte Methoden wie z.B. die Sprühtrocknung oder die Ofentrocknung angewandt werden. Durch die Trocknung resultiert ein sogenanntes Xerogel, welches den Träger des Chromkatalysators bildet.

Bekanntermaßen können in dieses Xerogel bei seiner Herstellung durch Cofällung Silicium-, Eisen- und/oder Borverbindungen eingebaut werden. Außerdem können auch noch die vorstehend genannten Phosphorverbindungen zugemischt werden.

Methodisch gesehen weist das Auftragen der erfindungsgemäß zu verwendenden Chrom- und Phosphorverbindungen auf das feinteilige Aluminiumsilikat-Hydrogel oder -Xerogel, d.h. die Herstellung der Katalysatorvorstufe, keine Besonderheiten auf, sondern kann in üblicher und bekannter Weise durch Suspendieren des Gels in einem organischen Lösungsmittel und Zugabe der Chrom- und Phosphorverbindungen erfolgen. Hierbei können die Chrom- und Phosphorverbindungen getrennt voneinander in beliebiger Reihenfolge oder gleichzeitig aufgetragen werden. Handelt es sich bei den erfindungsgemäß zu verwendenden Chrom- und Phosphorverbindungen um feste Stoffe, werden sie zum Zwecke des Auftragens in geeigneten Lösungsmitteln gelöst. Die Auswahl des Lösungsmittels richtet sich ganz einfach nach den Löslichkeitseigenschaften der betreffenden organischen Phosphorverbindungen einerseits und der Chrom(III)-Verbindungen andererseits: Sollten beispielsweise die angewandten organischen Phosphorverbindungen nicht in Wasser oder Mischungen aus Wasser und polaren organischen Lösungsmitteln löslich sein, wird man sie getrennt von den wasserlöslichen Chrom(III)-Verbindungen aus organischen Lösungsmitteln auf die Hydrogele und Xerogele auftragen. Der Fachmann kann daher die geeigneten Lösungsmittel und die vorteilhafteste Verfahrensweise ganz einfach anhand der bekannten Löslichkeitseigenschaften der organischen Phosphor- und Chrom(III)-Verbindungen auswählen. Sind die Chrom- und Phosphorverbindungen dagegen flüssig, kann auf die Verwendung eines Lösungsmittels verzichtet werden.

Im allgemeinen werden die vorstehend beschriebenen Komponenten bei Raumtemperatur während 10 bis 120 Minuten miteinander vermischt. Anschließend wird das Suspensionsmittel innerhalb von 2 bis 10 Stunden abdestilliert, wodurch die Katalysatorvorstufe resultiert.

Bei der Herstellung der Katalysatorvorstufe werden die vorstehend genannten Chrom(III)-Verbindungen und die organischen Phosphorverbindungen in solchen Mengenverhältnissen angewandt, daß im fertigen Chromkatalysator ein Atomverhältnis von Chrom:Phosphor von 20:1 bis 1:20 resultiert. Im allgemeinen empfiehlt es sich nicht, andere Atomverhältnisse zu wählen, weil hierdurch die katalytische Wirksamkeit des Chromkatalysators nachteilig beeinflußt wird. Für den Chromkatalysator ist es besonders vorteilhaft, bei der Herstellung der Katalysatorvorstufe die Mengenverhältnisse von Chrom(III)-verbindungen zu organischen Phosphorverbindungen so einzustellen, daß im fertigen Chromkatalysator ein Atomverhältnis von Chrom:Phosphor von 6:1 bis 1:6 resultiert. Erfindungsgemäße Phillips-Katalysatoren, welche Chromkatalysatoren eines solchen Chrom:Phosphor-Verhältnisses als katalytisch wirksame Komponente aufweisen, liefern Ethylen-α-Olefin-Copolymerisate mit besonders vorteilhaftem Eigenschaftsprofil.

Unabhängig davon nach welcher Methode die Katalysatorvorstufe hergestellt wird, werden die Mengen der erfindungsgemäß zu verwendenden Chrom(III)-Verbindungen und organischen Phosphorverbindungen so gewählt, daß der fertige Chromkatalysator einen Gehalt an Chrom zwischen 0,01 und 5 Gew.-% und einen Gehalt an Phosphor zwischen 0,01 und 5 Gew.-% aufweist. Werden weniger als 0,01 Gew.-% an Phosphor oder Chrom verwendet, läßt die katalytische Wirksamkeit des betreffenden Phillips-Katalysators stark zu wünschen übrig. Dagegen rechtfertigt die vergleichsweise geringe weitere Steigerung der katalytischen Aktivität nicht die Erhöhung der Gehalte über 5 Gew.-% Chrom und 5 Gew.-% Phosphor hinaus. Demnach handelt es sich bei den Gewichtsbereichen von jeweils 0,01 bis 5 Gew.-% für Chrom und Phosphor um optimale Bereiche, innerhalb derer der Chrom- und Phosphorgehalt des Chromkatalysators breit variiert und den gegebenen technischen Bedingungen einerseits und dem gewünschten Eigenschaftsprofil der Ethylen-α-Olefin-Copolymerisate andererseits angepaßt werden können. Innerhalb dieser optimalen Bereiche ist derjenige von 0,1 bis 2 Gew.-% Chrom und derjenige von 0,1 bis 3 Gew.-% Phosphor hervorzuheben, weil erfindungsgemäße Phillips-Katalysatoren, welche Chromkatalysatoren eines solchen Chrom- und Phosphorgehalts aufweisen, besonders vorteilhaft sind. Als ganz besonders vorteilhaft erweisen sich die erfindungsgemäßen Phillips-Katalysatoren, deren Chromkatalysator 0,5 bis 1,5 Gew.-% Chrom und 1 bis 2 Gew.-% Phosphor enthält. Hiervon sind wiederum diejenigen erfindungsgemäßen Phillips-Katalysatoren hervorzuheben, deren Chromkatalysator das vorstehend genannte Atomverhältnis von Chrom:Phosphor von 6:1 bis 1:6 aufweist.

Bei der Herstellung des erfindungsgemäßen Phillips-Katalysators wird die Katalysatorvorstufe bei höheren Temperaturen in einer oxidierenden Atmosphäre aktiviert, wodurch der erfindungsgemäß zu verwendende, feinteilige, Aluminiumsilikatgeträgerte, phosphorhaltige Chromkatalysator entsteht. Methodisch gesehen weist dieser Aktivierungsschritt keine Besonderheiten auf, sondern er kann in üblicher und bekannter Weise durch Erhitzen der Katalysatorvorstufe auf Temperaturen von 300 bis 900, vorzugsweise 500 bis 750°C, erfolgen. Bekanntermaßen wird hierbei die Katalysatorvorstufe in einer oxidierenden Atmosphäre erhitzt. Beispiele geeigneter oxidierender Atmosphären sind reiner Sauerstoff, Sauerstoff-Edelgas-Gemische und Luft, von denen Luft aus Gründen der Wirtschaftlichkeit besonders bevorzugt verwendet wird. Im allgemeinen liegt die Aktivierungszeit bei 30 Minuten bis 24 Stunden, wobei eine Dauer von 1 bis 10 Stunden von Vorteil ist.

Vor seiner Verwendung kann der Chromkatalysator auch noch durch Ethylen und/oder α-Olefine, Kohlenmonoxid oder Triethylboran reduziert oder durch Fluoridierung oder Silylierung modifiziert werden.

Der erfindungsgemäße Phillips-Katalysator eignet sich hervorragend für die Herstellung von Copolymerisaten des Ethylens mit α-Olefinen nach den Phillips-Verfahren. Hierbei kommen als Polymerisationsreaktoren die üblichen und bekannten Schleifenreaktoren, Autoklaven, Gasphasenreaktoren mit Rührer und Gasphasenwirbelschichtreaktoren in Betracht.

Beispiele für geeignete α-Olefine, welche mit Ethylen copolymerisiert werden können, sind Prop-1-en, But-1-en, Pent-1-en, Hex-1-en und Oct-1-en sowie die konjugierten und nicht konjugierten Diolefine, Butadien, Penta-1,3-dien, 2,3-Dimethylbutadien, Penta-1,4-dien, Hexa-1,5-dien und Vinylcyclohexen. Im allgemeinen werden die Comonomere dem Ethylen in einer solchen Menge zugesetzt, daß Ethylencopolymerisate aus 96 bis 99,8 Gew.-% an einpolymerisiertem Ethylen und 0,2 bis 4 Gew.-% mindestens eines einpolymerisierten Comonomeren entstehen.

Der erfindungsgemäße Phillips-Katalysator weist besondere unerwartete Vorteile auf. So ist er empfindlich gegenüber der Reglerwirkung von Wasserstoff. Er eignet sich hervorragend für die Copolymerisation des Ethylens nach den üblichen und bekannten particle-form-Verfahren in einer Suspension aus einem gesättigten Kohlenwasserstoff, Ethylen und Comonomeren unter einem Druck von 20 bis 50, insbesondere 40 bar, und Temperaturen von 90 bis 110°C. Hierbei liefert er mit hoher Produktivität Ethylen-α-Olefin-Copolymerisate von vorzüglicher Morphologie, guter Verarbeitbarkeit und hoher Zähigkeit. Vor allem aber eignen sich die in erfindungsgemäßer Verfahrensweise hergestellten Ethylen-α-Olefin-Copolymerisate für die Herstellung von Kleinhohlkörpern, Kunststoffkraftstoffbehältern oder Rohren von hoher Spannungsrißbeständigkeit (ESCR), guter Zeitstandfestigkeit und guter Schockzähigkeit.

### Beispiel und Vergleichsversuch

### Beispiel

### Die Herstellung eines erfindungsgemäßen Phillips-Katalysators und seine Verwendung zur Herstellung eines Ethylen-α-Olefin-Copolymerisats

In einem 2-l-Glaskolben wurden 200 g eines feinteiligen Aluminiumsilikat-Xerogels(verwendet wurde Aluminium-Cogel Nr. 6 der Fa. Grace, Worms) unter Stickstoff in 0,8 l Methanol dispergiert. Zu dieser Suspension wurden 13,5 g Trisacetylacetonato-chrom(III) und 12 g Triethylphosphat hinzugegeben. Durch die Verwendung dieser Mengen an Chrom- und Phosphorverbindung resultierte ein Gehalt von 1 Gew.-% Chrom und 1 Gew.-% Phosphor im fertigen Chromkatalysator. Nach 30 minütigem Rühren wurde das Suspensionsmittel im Rotationsverdampfer entfernt. Die resultierende Katalysatorvorstufe war ein graurotes, rieselfähiges Pulver. Dieses wurde im Luftstrom bei 600°C während 2 Stunden in einem Wirbelschichtaktivator aktiviert. Der resultierende Chromkatalysator wies einen elementaranalytisch ermittelten Chrom- und Phosphorgehalt von jeweils 1 Gew.-% auf. Unmittelbar nach seiner Aktivierung wurde er zur Copolymerisation von Ethylen mit Hex-1-en verwendet. Zu diesem Zweck wurde ein 10 l-Druckautoklav mit Rührer auf 95°C erhitzt und während 10 Minuten mit trockenem Stickstoff gespült. Hiernach wurden 100 ml Hex-1-en und 5 l Isobutan in den Druckautoklaven eingeführt. Im Anschluß daran wurde mit Ethylen im Autoklaven ein Gesamtdruck von 40 bar eingestellt. Durch Einbringen von insgesamt 500 mg des Chromkatalysators mit Hilfe einer Schleuse wurde die Copolymerisation gestartet und aufrechterhalten. Nach 20 minütiger Polymerisation bei einer Temperatur von 95 ± 2°C wurde der Autoklav unter Verdampfen des Isobutans und der nicht umgesetzten Monomeren entspannt, und das resultierende Polymerisat wurde entnommen.

Die Copolymerisation wurde viermal wiederholt, wobei die Reaktionen bei 30, 40, 50 oder 60 Minuten abgebrochen wurden.

Die Produktivität des erfindungsgemäßen Phillips-Katalysators sowie der Staudinger-Index J_{g} (cm³/g), der Schmelzflußindex HLMI (g/10 min) und der Hexengehalt der resultierenden Copolymerisate wurden für jeden Versuch bestimmt. Hierdurch wurde zugleich die Abhängigkeit dieser Parameter von der Copolymerisationszeit ermittelt. Die hierbei erhaltenen Werte werden in der Tabelle 1 den betreffenden Werten des Vergleichsversuchs gegenübergestellt. Der Vergleich zeigt, daß der erfindungsgemäße Phillips-Katalysator das α-Olefin weitaus unabhängiger von der Copolymerisationszeit in die Ethylen-α-Olefin-Copolymerisate einbaute als der herkömmliche Phillips-Katalysator. Hierdurch resultierte ein Ethylen-Hex-1-en-Copolymerisat, worin das Hex-1-en gleichmäßig, d.h. weitaus unabhängiger vom Molekulargewicht, eingebaut war, als dies bei dem in herkömmlicher Weise hergestellten Ethylen-Hex-1-en-Copolymerisat des Vergleichsversuchs der Fall war.

Dies wird auch noch durch die Fraktionierung nach Holtrup (vgl. Makromol. Chemie, Band 178, Seiten 2335 bis 2349, 1977) der nach 60 minütiger Copolymerisation erhaltenen Ethylen-Hex-1-en-Copolymerisate des Beispiels und des Vergleichsversuchs untermauert. Die betreffenden Werte finden sich in der Tabelle 2.

### Vergleichsversuch

### Die Herstellung eines bekannten Phillips-Katalysators und seine Verwendung zur Herstellung eines Ethylen-Hex-1-en-Copolymerisats

Das Beispiel wurde wiederholt, nur daß anstelle des Aluminiumsilikat-Xerogels Silicagel T-195 der Fa. BASF verwendet wurde und die Zugabe von Triethylphosphat unterblieb. Der resultierende bekannte Phillips-Katalysator von hellgrüner Farbe wurde anstelle des erfindungsgemäßen des Beispiels für die Copolymerisation verwendet.

Die Versuchsergebnisse finden sich in der Tabelle 1, die Ergebnisse der Fraktionierung nach Holtrup finden sich in der Tabelle 2.

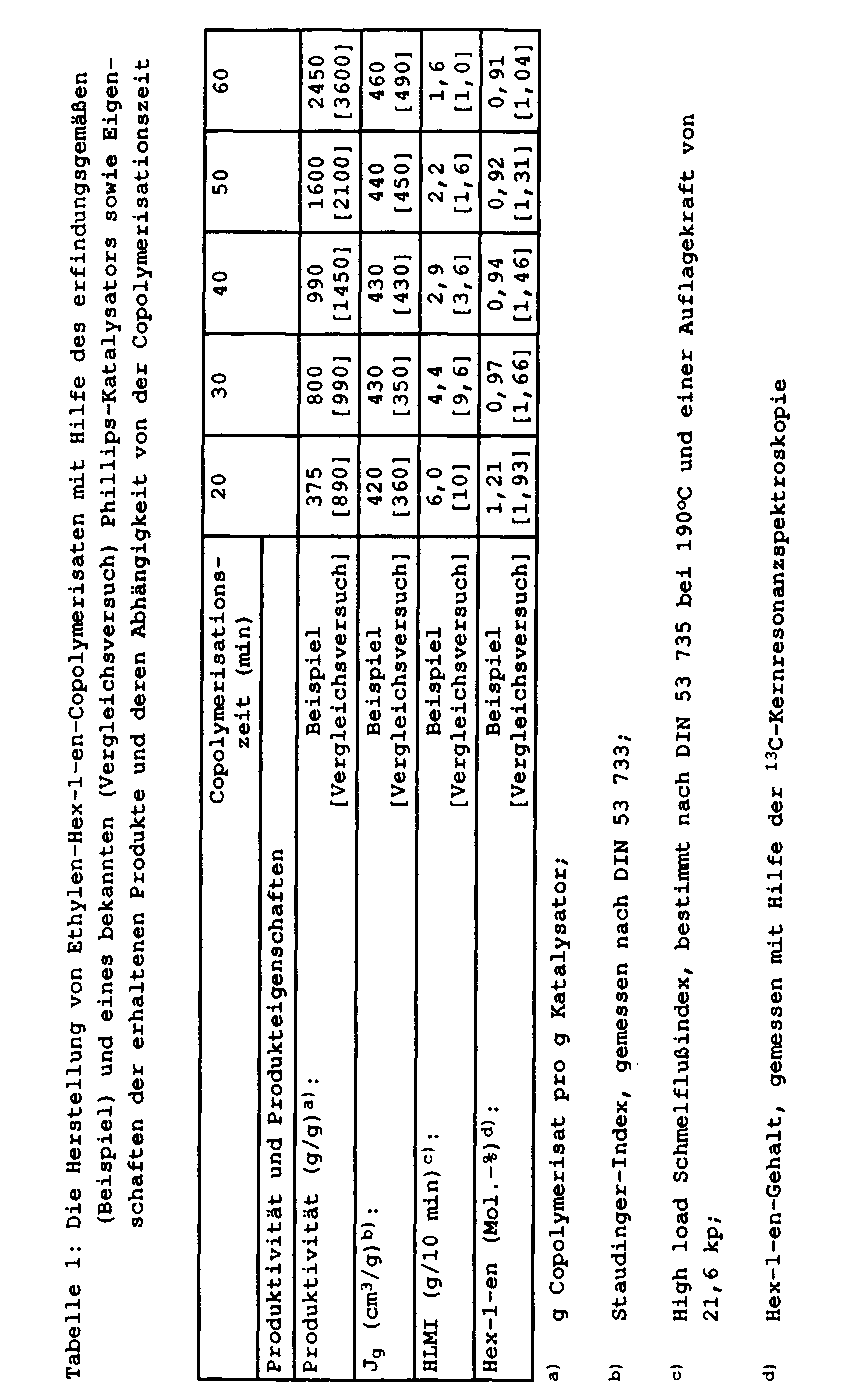

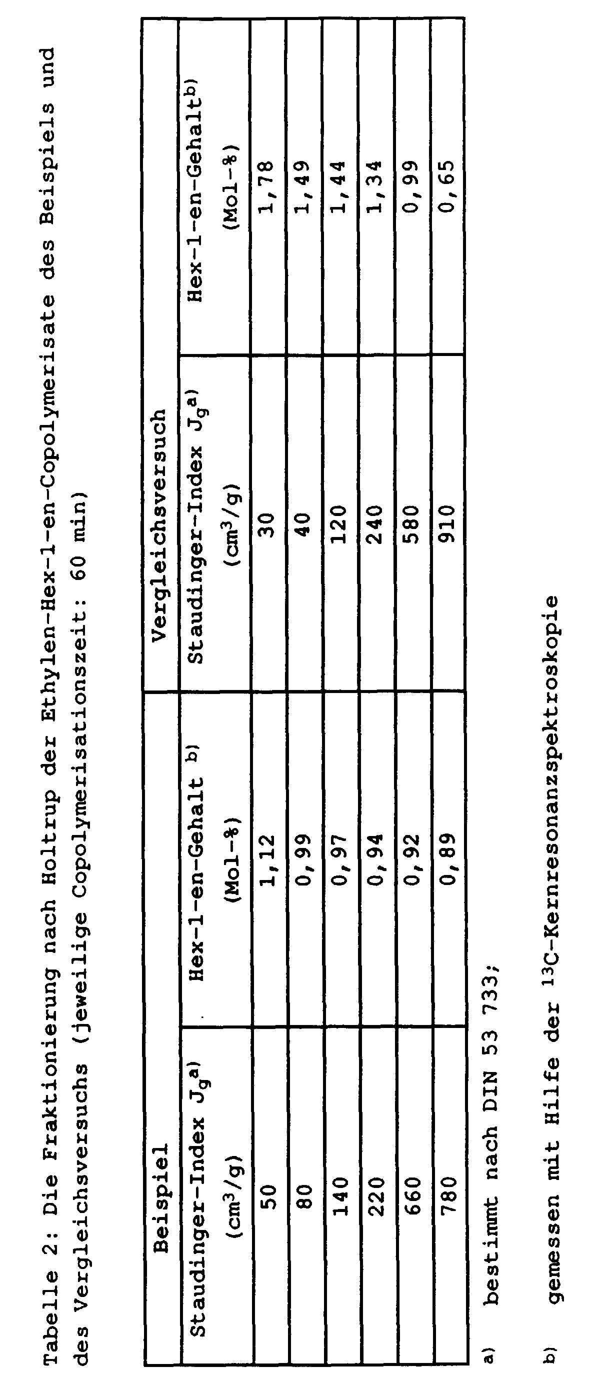

## Patentansprüche

1. Phillips-Katalysator für die Copolymerisation von Ethylen mit α-Olefinen, enthaltend als katalytisch wirksame Komponente einen feinteiligen, Aluminiumsilikat-geträgerten, phosphorhaltigen Chromkatalysator, welcher herstellbar ist, indem man
(1) mindestens eine organische Phosphor(III)-, -(IV)- und/oder -(V)-Verbindung und mindestens eine Chrom(III)-Verbindung, welche mit den besagten Phosphorverbindungen unter den angewandten Reaktionsbedingungen nicht reagiert, in beliebiger Reihenfolge nacheinander oder gleichzeitig auf ein feinteiliges Aluminiumsilikat-Hydrogel oder -Xerogel unter Bildung einer Katalysatorvorstufe aufträgt und
(2) die Katalysatorvorstufe durch Erhitzen auf Temperaturen von 300 bis 900°C in einer oxidierenden Atmosphäre aktiviert, wodurch der Chromkatalysator entsteht, welcher einen Gehalt an Chrom zwischen 0,01 und 5 Gew.-%, einen Gehalt an Phosphor zwischen 0,01 und 5 Gew.-%und ein Atomverhältnis von Chrom:Phosphor von 20:1 bis 1:20 hat.

2. Der Phillips-Katalysator nach Anspruch 1, dadurch gekennzeichnet, daß es sich bei den Chrom(III)-Verbindungen um wasserlösliche Salze des dreiwertigen Chroms oder um Chrom(III)-Chelatkomplexe, bei den organischen Phosphor(III)-Verbindungen um Phosphorigsäureester, den organischen Phosphor(IV)-Verbindungen um Phosphonsäureester und den organischen Phosphor(V)-Verbindungen um Phosphorsäureester handelt.

3. Der Phillips-Katalysator nach Anspruch 2, dadurch gekennzeichnet, daß man als Phosphorsäureester Triethylphosphat und als Chrom(III)-Chelatkomplex Tris-acetylacetonato-chrom(III) verwendet.

4. Verfahren zur Herstellung von Copolymerisaten des Ethylens mit α-Olefinen durch Polymerisation von Gemischen aus Ethylen und α-Olefinen mit Hilfe von Phillips-Katalysatoren, dadurch gekennzeichnet, daß man hierbei Phillips-Katalysatoren gemäß einem der Ansprüche 1 bis 3 verwendet.

5. Das Verfahren nach Anspruch 4, dadurch gekennzeichnet, daß man in der Gegenwart von Wasserstoff copolymerisiert.

## Claims

1. A Phillips catalyst for the copolymerization of ethylene with α-olefins, containing, as a catalytically active component, a finely divided, aluminum silicate-supported, phosphorus-containing chromium catalyst which can be prepared by
(1) applying at least one organic phosphorus(III), (IV) and/or (V) compound and at least one chromium(III) compound which does not react with said phosphorus compounds under the reaction conditions used, in succcession in any order or simultaneously, to a finely divided aluminum silicate hydrogel or xerogel with formation of a catalyst intermediate and
(2) activating the catalyst intermediate by heating to from 300 to 900°C in an oxidizing atmosphere, with the result that the chromium catalyst, which contains from 0.01 to 5% by weight of chromium and from 0.01 to 5% by weight of phosphorus and has an atomic ratio of chromium to phosphorus of from 20 : 1 to 1 : 20, is formed.

2. A Phillips catalyst as claimed in claim 1, wherein the chromium(III) compounds are water-soluble salts of trivalent chromium or are chromium(III) chelate complexes, the organic phosphorus(III) compounds are phosphites, the organic phosphorus(IV) compounds are phosphonates and the organic phosphorus(V) compounds are phosphates.

3. A Phillips catalyst as claimed in claim 2, wherein the phosphate used is triethyl phosphate and the chromium(III) chelate complex used is trisacetylacetonatochromium(III).

4. A process for the preparation of a copolymer of ethylene with α-olefins by polymerization of a mixture of ethylene and α-olefins with the aid of a Phillips catalyst, wherein a Phillips catalyst as claimed in any of claims 1 to 3 is used.

5. A process as claimed in claim 4, wherein copolymerization is effected in the presence of hydrogen.

## Revendications

1. Catalyseur de Phillips pour la copolymérisation d'éthylène avec des α-oléfines, contenant comme composant à activité catalytique un catalyseur au chrome en particules fines, supporté sur du silicate d'aluminium et contenant du phosphore, que l'on peut préparer en
(1) déposant au moins un composé organique de phosphore(III), -(IV) et/ou -(V) et au moins un composé de chrome(III), qui ne réagit pas avec lesdits composés de phosphore dans les conditions de réaction employées, successivement dans un ordre quelconque ou simultanément sur un hydrogel ou un xérogel de silicate d'aluminium en particules fines pour former un précurseur de catalyseur et
(2) activant le précurseur de catalyseur par chauffage à des températures de 300 à 900°C dans une atmosphère oxydante, pour former le catalyseur au chrome ayant une teneur en chrome comprise entre 0,01 et 5 % en poids, une teneur en phosphore comprise entre 0,01 et 5 % en poids et un rapport atomique de chrome:phosphore de 20:1 à 1:20.

2. Catalyseur de Phillips selon la revendication 1, caractérisé par le fait qu'il s'agit pour les composés de chrome(III) de sels insolubles dans l'eau du chrome trivalent ou de complexes chélates du chrome(III), pour les composés organiques du phosphore(III) d'esters d'acide phosphoreux, pour les composés organiques du phosphore(IV) d'esters d'acide phosphonique et pour les composés organiques du phosphore(V) d'esters d'acide phosphorique.

3. Catalyseur de Phillips selon la revendication 2, caractérisé par le fait qu'on utilise, comme ester d'acide phosphorique, du phosphate de triéthyle et, comme complexe chélate de chrome(III), du tris-acétyl-acétonatochrome(III).

4. Procédé pour la préparation de copolymères de l'éthylène avec des α-oléfines par polymérisation de mélanges d'éthylène et d'α-oléfines au moyen de catalyseurs de Phillips, caractérisé par le fait qu'on utilise pour ce faire des catalyseurs de Phillips selon l'une quelconque des revendications 1 à 3.

5. Procédé selon la revendication 4, caractérisé par le fait qu'on copolymérise en présence d'hydrogène.
